# EUROPÄISCHE PATENTSCHRIFT

(11) **EP 2 016 302 B1**
(45) Veröffentlichungstag und Bekanntmachung des Hinweises auf die Patenterteilung: **24.02.2010**
(21) Anmeldenummer: 07728469.3
(22) Anmeldetag: 25.04.2007
(51) Int. Cl.: F16D 48/06

(54) **VERFAHREN ZUR ANSTEUERUNG EINES BETÄTIGUNGSMITTELS**
METHOD FOR ACTIVATING AN ACTUATING MEANS
PROCEDE DE COMMANDE D'UN MOYEN D'ACTIONNEMENT

(30) Priorität: 10.05.2006 DE 102006021698
(43) Veröffentlichungstag der Anmeldung: 21.01.2009
(73) Patentinhaber: ZF Friedrichshafen AG, 88038 Friedrichshafen (DE)
(72) Erfinder: DOEBELE, Bernd, 88682 Salem (DE); MILLER, Martin, 88090 Immenstaad (DE)
(86) Internationale Anmeldenummer: PCT/EP2007/054013
(87) Internationale Veröffentlichungsnummer: WO 2007/128690

(56) Entgegenhaltungen:
- WO-A-2004/063590
- DE-A1- 10 338 558
- US-A- 6 015 031
- US-A1- 2004 186 645
- US-A1- 2005 090 370
- US-B2- 6 951 526

## Beschreibung

Die Erfindung betrifft ein Verfahren zur Ansteuerung eines Betätigungsmittels nach der im Oberbegriff von Anspruch 1 näher definierten Art.

Automatisierte Schaltsysteme bestehen hinsichtlich ihrer Hauptkomponenten aus konventionellen, gegebenenfalls auch manuell betätigbaren Schaltsystemen, bei denen das Betätigen der Schalt- und/oder Anfahrkupplung zwischen Antriebsmotor und Getriebe sowie das Wählen und Schalten von Getriebegängen über entsprechende Betätigungsmittel automatisiert erfolgt. Diese Betätigungsmittel sind üblicherweise als hydraulisch oder pneumatisch betätigbare Kolben-Zylinder-Anordnungen oder als elektrische Aktuatoren ausgebildet, welche auf Stellmittel für die genannten Getriebefunktionen einwirken.

Bei derartigen Kolben-Zylinder-Anordnungen ist ein Kolben axial verschiebbar in einem Zylinder angeordnet. Der Kolben begrenzt einen mit einem Medium gefüllten Druckraum, wobei der Kolben direkt am Zylinder anliegen kann. Des Weiteren können zwischen Zylinder und Kolben Dichtmittel angeordnet sein. Bei einer Betätigung der Kolben-Zylinder-Anordnung wird der Kolben im Zylinder axial bewegt und infolge adhäsiver Haftung zu komfortschädlichen, akustisch wahrnehmbaren Schwingungen angeregt. Um solche Schwingungen, welche auch als Stick-Slip-Effekt bekannt sind, zu vermeiden, wird die Kolbenoberfläche beispielsweise mit einem Spezialschmiermittel versehen. Ein Nachteil hierbei ist, dass der Stick-Slip-Effekt durch eine Schmierung der Kolbenoberfläche nicht dauerhaft beseitigt werden kann, insbesondere nicht über die Lebensdauer einer Kolben-Zylinder-Anordnung.

Bei automatisierten Schaltsystemen mit pneumatisch oder hydraulisch betätigbarer Kupplung oder fußbetätigten Kupplungen mit pneumatischem oder hydraulischem Übertragungsweg und pneumatischer oder hydraulischer Verstärkung kann es durch verschiedene Einflüsse zu Stick-Slip-Effekten bei der Kupplungsbetätigung kommen, beispielsweise durch Bauteilverschleiß, Verklemmungen oder Verunreinigungen. Solche Einflüsse können nicht nur im System Kolben/Zylinder, sondern auch in der gesamten Kupplungsbetätigung auftreten. Des Weiteren können diese Einflüsse zur Vergrößerung einer bei der Kupplungsausrückung vorhandenen Hysterese führen. Der Stick-Slip-Effekt kann sich beispielsweise in einem vorübergehenden Haften des Reibbelags einer Kupplungsscheibe an den Gegenreibflächen der Kupplungsdruckplatten mit anschließendem Lösen der Haftreibung äußern bzw. bei einer Betätigung einer Kolben-Zylinder-Anordnung infolge adhäsiver Haftung zwischen Zylinder und Kolben entstehen. Auch an Kontaktflächen im mechanischen Übertragungsweg, beispielsweise an Umlenkungen oder Lagerbolzen, kann Haftreibung entstehen. Bei einem als Klauengetriebe ausgestalteten Zahnräderwechselgetriebe kann es bei Schaltvorgängen zu so genannten "Zahn-auf-Zahn-Stellungen" kommen. Wenn im Zustand des verspannten Aufeinanderstehens von Kupplungsverzahnungen die Fahrzeugkupplung geschlossen wird und das sich aufbauende Drehmoment die Verzahnungen gegeneinander verdreht, kann es zum Einspuren der Kupplungsverzahnungen kommen. Speziell im Fall einer Auflösung einer "Zahn-auf Zahn-Stellung" im Stillstand, bei dem die Kupplung vom geöffneten Zustand in die Position der Mitnahme gebracht wird, kann es in Folge einer größer werdenden Hysterese zu unkontrollierbaren Einrückbewegungen der Kupplung kommen, da die Schaltkraft der Kolben-Zylinder-Anordnung gegenüber der Kupplungskraft verringert werden muss. Befindet sich eine Kupplung in der Position der Mitnahme, so wird über die Kupplung ein geringes Drehmoment übertragen.

In der DE 100 49 913 A1 ist ein Geberzylinder für ein hydraulisches Kupplungs- oder Bremssystem offenbart. Dieser Geberzylinder besteht aus einem Gehäuse in welchem ein Kolben axial verschiebbar angeordnet ist. Der Kolben begrenzt einen mit einer Hydraulikflüssigkeit befüllten Druckraum, wobei zwischen dem Gehäuse und dem Kolben zumindest ein Dichtmittel angeordnet ist. Vorzugsweise ist das Dichtmittel drehfest am Gehäuse des Geberzylinders angeordnet. Der Kolben und das zumindest eine Dichtmittel werden bei einer Betätigung des Geberzylinders relativ gegeneinander verdreht, wobei vorzugsweise der Kolben gegen das Dichtmittel verdreht wird. Durch diese veränderte Bewegungsrichtung bei der Betätigung des Kolbens erfolgt an der Kontaktfläche zwischen dem Dichtmittel und der Kolbenoberfläche ein geänderter Übergang von Haft- in Gleitreibung, so dass der so genannte Stick-Slip-Effekt weitgehend vermieden wird.

Ebenso ist in der DE 100 49 913 A1 eine zweite Ausführungsform des Geberzylinders offenbart, wobei der Kolben zumindest in einem Verschiebebereich des zumindest einen Dichtmittels eine strukturierte Oberfläche aufweist. Auf diese Weise kann der Adhäsivkontakt zwischen dem Dichtmittel und der Kolbenoberfläche minimiert werden, so dass eine Schwingungsanregung infolge der Übergänge von Haft- in Gleitreibung ebenfalls minimiert bzw. beseitigt werden kann.

Zur Ansteuerung von hydraulischen bzw. pneumatischen Betätigungsmitteln sind Druckerzeugungs- und Steuerungsvorrichtungen notwendig, die gemäß dem Stand der Technik eine Hydraulik- bzw. Pneumatikpumpe als Druckerzeugungsvorrichtung, einen Druckspeicher, eine hydraulische bzw. pneumatische Steuerungseinheit mit Steuerungsventilen und Sensoren umfassen, welche mit einer zentralen Steuerungs- und Regelungsvorrichtung in Verbindung stehen und von dieser nach dort abgespeicherten Steuerungs- und Regelungsfunktionen ansteuerbar sind.

Nachteile des Standes der Technik sind, dass bei herkömmlichen Kolben-Zylinder-Anordnungen der Stick-Slip-Effekt durch eine Schmierung der Kolbenoberfläche nicht dauerhaft beseitigt werden kann und bei den bekannten Lösungen entweder eine Addition einer Drehbewegung zur axialen Bewegung des Kolbens oder eine aufwendige Bearbeitung der Kolbenfläche notwendig sind, um eine Schwingungsanregung infolge der Übergänge von Haft- in Gleitreibung zu minimieren bzw. zu beseitigen. Des Weiteren wirken sich an einer Schalt- und/oder Anfahrkupplung auftretende Stick-Slip-Effekte negativ auf das Übertragungsverhalten der Kupplung aus.

In der US 6,951,526 B2 wird ein Kraftfahrzeug mit einem eine Lamellen-Mehrfach-Kupplungseinrichtung aufweisenden Antriebsstrang offenbart. Zur Unterstützung des Losbrechens der Lamellen wird vorgeschlagen, dass eine Steuereinrichtung dafür ausgelegt ist, mittels einer vorzugsweise hydraulischen Betätigungseinrichtung die Kupplungsanordnungen wenigstens einmal, vorzugsweise mehrmals aufeinander folgend, im Ein- und Ausrücksinn zu betätigen, um durch Verschiebung der Lamellen ein Lösen der Lamellen voneinander zu erreichen oder zumindest zu unterstützen. Nachteilig hierbei ist, dass durch das vorzugsweise mehrmals aufeinander folgende Betätigen der Kupplungsanordnungen im Ein- und Ausrücksinn Ruckelbewegungen an der Kupplungseinrichtung entstehen, und dass eine Überwindung des Stick-Slip-Effekts dennoch nicht gewährleistet ist.

Der vorliegenden Erfindung liegt die Aufgabe zugrunde, ein Verfahren zur Ansteuerung eines Betätigungsmittels darzustellen, durch welches die Nachteile des Standes der Technik minimiert bzw. beseitigt werden.

Die der Erfindung zugrunde liegende Aufgabe wird durch ein, auch die kennzeichnenden Merkmale des Hauptanspruchs aufweisendes, gattungsgemäßes Verfahren zur Ansteuerung eines Betätigungsmittels gelöst.

Bei dem erfindungsgemäßen Verfahren wird ein Betätigungsmittel über eine Druckregelungsvorrichtung so angesteuert, dass einer beabsichtigten Bewegungsrichtung eines Kolbens des Betätigungsmittels eine der beabsichtigten Bewegungsrichtung entgegengesetzte Bewegungsrichtung vorangeht.

Ab Registrierung dieser Bewegungsrichtung wird auf die beabsichtigte Bewegungsrichtung gewechselt, wobei die Richtungsumkehr aus der Bewegung heraus erfolgt. Durch die Betätigung des Betätigungsmittels in die entgegengesetzte Richtung, wird eine auf das Betätigungsmittel wirkende äußere Kraft größer, beispielsweise eine Kupplungskraft. Durch dieses erhöhte Kraftniveau werden mögliche Stick-Slip-Effekte im Umkehrpunkt der Bewegungsrichtung überwunden.

Wird dieses Verfahren zur Ansteuerung einer Kupplung verwendet, beispielsweise einer Schalt- und/oder Anfahrkupplung zwischen Antriebsmotor und Getriebe, so wird diese vor der Bewegung in Richtung "schließen" in Richtung "öffnen" bewegt. Hierdurch wird die auf das Betätigungsmittel wirkende Kupplungskraft größer. Ab einer Registrierung der Bewegung in Richtung "öffnen" wird auf die Bewegungsrichtung "schließen" gewechselt, wobei die Richtungsumkehr aus der Bewegung heraus erfolgt. Somit wirken auftretende Stick-Slip-Effekte bei der Betätigung der Kupplung in Richtung "öffnen" und haben daher keinen Einfluss auf das Übertragungsverhalten der Kupplung. Mögliche Stick-Slip-Effekte im Umkehrpunkt der Bewegungsrichtung werden durch ein erhöhtes Kraftniveau im Umkehrpunkt überwunden. Da der schließenden Bewegung eine Bewegung in öffnender Richtung vorangeht, wird die Wirkung eines möglichen Wegsprungs aus der Überwindung einer Hysterese gemindert. Eine Routine zur Ansteuerung des Betätigungsmittels kann entweder grundsätzlich ablaufen, oder nur dann aktiv werden, wenn sich die Iststellung der Sollstellung des Betätigungsmittels bzw. der Kupplung innerhalb eines bestimmten Beobachtungszeitraums nicht um ein definiertes Quantum nähert. Diese Routine kann beispielsweise über eine Steuerungs- und Regelungsvorrichtung gesteuert bzw. geregelt werden.

Im Folgenden wird das Grundprinzip der Erfindung, welche mehrere Ausführungsformen zulässt, an Hand einer Zeichnung beispielhaft näher erläutert.

Es zeigen:
- Fig. 1: ein Betätigungsmittel, welches über eine Druckregelungs- vorrichtung betätigbar ist und
- Fig. 2: ein Diagramm, in welchem verschiedene Kupplungsverläu- fe dargestellt sind.

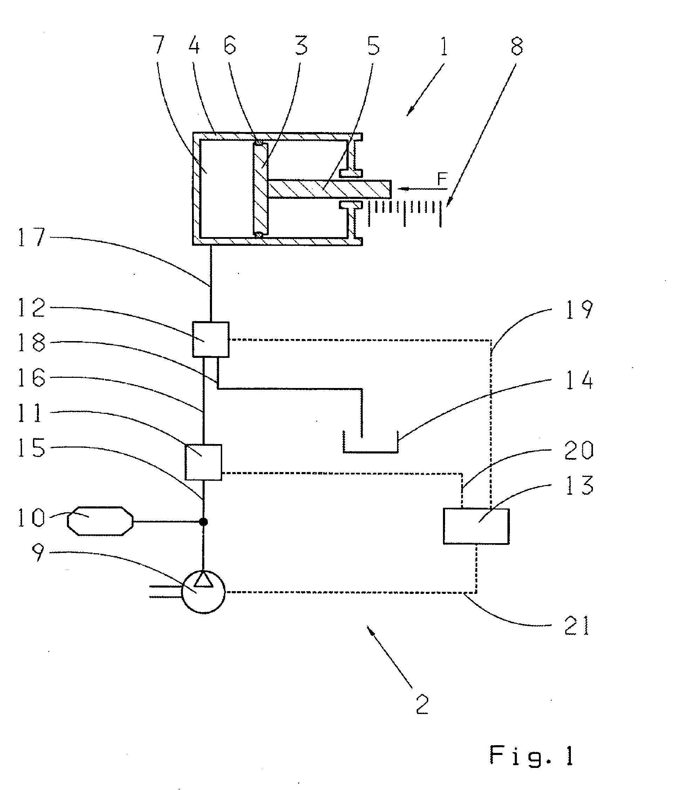

Die Fig. 1 zeigt ein Betätigungsmittel 1, welches beispielsweise als Kolben-Zylinder-Anordnung ausgebildet ist. Das Betätigungsmittel 1 weist einen Zylinder 4, einen Kolben 3 und eine Kolbenstange 5 auf. Zwischen dem Kolben 3 und dem Zylinder 4 kann ein Dichtmittel 6 angeordnet sein. Ist das Betätigungsmittel 1 betätigt, so wirkt auf die Kolbenstange 5 eine äußere Kraft F. Zur Ansteuerung und/oder Regelung des Betätigungsmittels 1 dient eine Druckregelungsvorrichtung 2. Zur Druckmittelversorgung des Betätigungsmittels 1 ist eine Druckerzeugungsvorrichtung 9 vorgesehen, beispielsweise eine Pumpe, welche ein Druckmedium auf einen so genannten Hauptdruck bringt. Dieser Hauptdruck liegt in einer Hauptdruckleitung 15 an, welche mit einem Druckmittelspeicher 10 verbunden ist. In diesem Druckmittelspeicher 10 wird ein vergleichsweise großes Volumen des von der Druckerzeugungsvorrichtung 9 auf Hauptdruck gebrachten Druckmediums zwischengespeichert, da die Druckerzeugungsvorrichtung 9 vorzugsweise diskontinuierlich arbeitet. An der Hauptdruckleitung 15 ist ein Druckregulierungsmittel 11 angeordnet, beispielsweise ein 2/2-Wegeventil oder ein Proportionalventil. Durch dieses Druckregulierungsmittel 11 wird eine Verbindung zwischen der Hauptdruckleitung 15 und einer Steuerdruckleitung 16 bedarfsgerecht hergestellt. Über ein Schaltventil 12, beispielsweise ein elektromagnetisches 3/2-Wegeventil, wird eine Verbindung von der Steuerdruckleitung 16 zu einer Druckmittelleitung 17 des Betätigungsmittels 1 hergestellt oder unterbrochen. Die Druckmittelleitung 17 ist mit dem Druckraum 7 des Betätigungsmittels 1 verbunden. Durch entsprechendes Ansteuern der Ventile 11, 12 kann ein entsprechender Steuerdruck im Druckraum 7 des Betätigungsmittels 1 angelegt werden. Ebenso kann durch ein entsprechendes Ansteuern der Ventile 11, 12 der Druckraum 7 des Betätigungsmittels 1 entleert werden. Somit kann der Kolben 3 im Zylinder 4 in die jeweils gewünschte Richtung bewegt werden. Das Druckregulierungsmittel 11, das Schaltventil 12 und die Druckerzeugungsvorrichtung 9 sind über elektrische Signalleitungen 19, 20, 21 mit einer Steuerungs- und Regelungsvorrichtung 13 verbunden. Über die Steuerungs- und Regelungsvorrichtung 13 werden unter anderem in Abhängigkeit von Getriebeparametern entsprechende Signale an das Druckregulierungsmittel 11, das Schaltventil 12 und die Druckerzeugungsvorrichtung 9 angelegt, wodurch ein situationsabhängiger Betätigungsdruck in den Leitungen 15, 16, 17 und somit eine bestimmte Schaltkraft im Druckraum 7 des Betätigungsmittels 1 entsteht. Das durch die Betätigung des Betätigungsmittels 1 verdrängte Druckmedium wird durch entsprechende Ansteuerung des Schaltventils 12 vom Druckraum 7 über eine Rückflussleitung 18 in einen als Druckmittelsenke 14 dienenden Behälter befördert oder bei einer pneumatischen Betätigung an die Umgebung abgegeben.

Erfindungsgemäß wird das Betätigungsmittel 1 über die Druckregelungsvorrichtung 2 so angesteuert, dass einer beabsichtigten Bewegung des Kolbens 3 in der Zeichenblattebene nach links eine Bewegung des Kolbens 3 in der Zeichenblattebene nach rechts vorangeht. Um den Kolben nach rechts zu bewegen, werden die Ventile 11, 12 so angesteuert, dass ein entsprechender Steuerdruck im Druckraum 7 des Betätigungsmittels 1 entsteht. Soll der Kolben nach links bewegt werden, dann werden die Ventile 11, 12 so angesteuert, dass der Druckraum 7 des Betätigungsmittels 1 über das Ventil 12 entleert wird. Ab einer Registrierung der Kolbenbewegung in der Zeichenblattebene nach rechts wird auf die beabsichtigte Bewegungsrichtung gewechselt, wobei die Richtungsumkehr aus der Bewegung heraus erfolgt. Die Registrierung der Kolbenbewegung wird dabei über ein Wegmesssystem 8 realisiert, beispielsweise über einen am Betätigungsmittel 1 intern oder extern angeordneten Wegsensor.

Wird durch das Betätigungsmittel 1 beispielsweise eine Schalt- und/oder Anfahrkupplung zwischen Antriebsmotor und Getriebe betätigt, so wird diese vor der Bewegung in Richtung "schließen" in Richtung "öffnen" bewegt. Hierdurch wird die auf die Kolbenstange 5 des Betätigungsmittels 1 wirkende Kupplungskraft F größer. Ab der Registrierung der Bewegung in Richtung "öffnen" wird auf die Bewegungsrichtung "schließen" gewechselt, wobei die Richtungsumkehr aus der Bewegung heraus erfolgt.

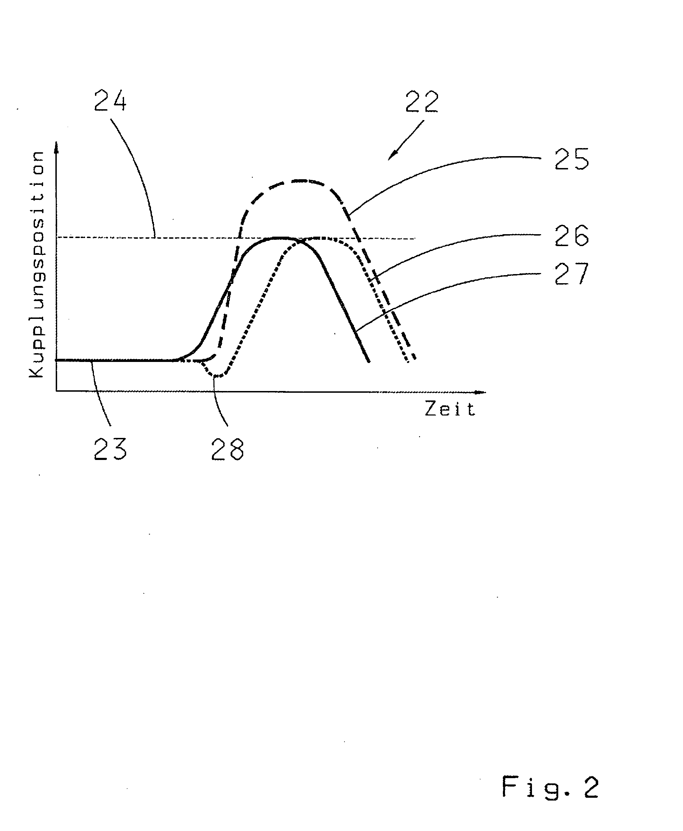

Durch das erfindungsgemäße Verfahren wirken auftretende Stick-Slip-Effekte beim Betätigen der Kupplung bzw. des Betätigungsmittels 1 in Richtung "öffnen- und haben somit keinen Einfluss auf das Übertragungsverhalten der Kupplung. Mögliche Stick-Slip-Effekte im Umkehrpunkt 28 (siehe Fig. 2) werden durch das im Umkehrpunkt 28 vorherrschende, erhöhte Kraftniveau überwunden. Da der "schießenden" Bewegung eine Bewegung in "öffnender" Richtung vorangeht, wird die Wirkung eines möglichen Wegsprungs aus der Überwindung einer Hysterese gemindert bzw. vermieden.

Die Fig. 2 zeigt ein Diagramm 22, in welchem verschiedene Kupplungsverläufe dargestellt sind. In diesem Diagramm 22 sind ein Sollverlauf 27 einer Kupplung, ein Kupplungsverlauf mit Stick-Slip-Effekten 25 und ein erfindungsgemäßer Kupplungsverlauf 26 dargestellt.

Da zur Erläuterung des Diagramms 22 Bezugszeichen aus der Fig. 1 benötigt werden, beinhaltet die nachfolgende Beschreibung der Fig. 2 auch Bezugszeichen der Fig. 1.

Der Sollverlauf 27 stellt einen optimierten Kupplungsverlauf dar, welcher in der Praxis angestrebt wird.

Beim Kupplungsverlauf 25 mit Stick-Slip-Effekt wird ein Mitnahmepunkt 24 einer Kupplung überschritten. Um von einem geöffneten Zustand 23 den Mitnahmepunkt 24 der Kupplung zu erreichen, muss ein Druckraum 7 eines Betätigungsmittels 1 gegen eine Kupplungskraft F, beispielsweise eine Membranfeder, entleert werden. Reicht die Kupplungskraft F zur Überwindung einer vorhandenen Haftreibung nicht aus, muss durch eine weitere Entleerung des Druckraumes 7 des Betätigungsmittels 1 die Schaltkraft des Betätigungsmittels 1 reduziert werden. Beim Losbrechen der Kupplung und/oder des Kolbens 3 im Zylinder 4 ist dann die Schaltkraft im Druckraum 7 des Betätigungsmittels 1 nicht mehr ausreichend, um ein weiteres Einrücken der Kupplung über den Mitnahmepunkt 24 zu verhindern. Reicht die Zeit vom Losbrechen bis zum Erreichen des Mitnahmepunktes 24 zum Gegensteuern (Entleeren des Zylinders) nicht mehr aus, so entsteht eine unkontrollierbare Einrückbewegung der Kupplung bzw. des Betätigungsmittels 1, wodurch der Mitnahmepunkt 24 der Kupplung überschritten wird.

Bei dem erfindungsgemäßen Verlauf 26 wird die Kupplung vor der Bewegungsrichtung "schließen" in Richtung "öffnen" bewegt. Hierdurch wird die auf die Kolbenstange 5 des Betätigungsmittels 1 wirkende Kupplungskraft F größer. Ab der Registrierung der Bewegung in Richtung "öffnen" wird auf die Bewegungsrichtung "schließen" gewechselt, wobei die Richtungsumkehr aus der Bewegung heraus erfolgt. Bei dem erfindungsgemäßen Verfahren wirken auftretende Stick-Slip-Effekte beim Betätigen des Betätigungsmittels 1 bzw. der Kupplung in Richtung "öffnen" und haben somit keinen Einfluss auf das Übertragungsverhalten der Kupplung. Mögliche Stick-Slip-Effekte im Umkehrpunkt 28 der Bewegungsrichtung werden durch das im Umkehrpunkt 28 vorherrschende, erhöhte Kraftniveau überwunden. Da der "schließenden" Bewegung eine Bewegung in "öffnender" Richtung vorangeht, wird die Wirkung eines möglichen Wegsprungs aus der Überwindung einer Hysterese gemindert und ein Überschreiten des Mitnahmepunktes 24 der Kupplung verhindert.

### Bezugszeichen

- 1: Betätigungsmittel, Kolben-Zylinder-Anordnung
- 2: Druckregelungsvorrichtung
- 3: Kolben
- 4: Zylinder
- 5: Kolbenstange
- 6: Dichtmittel
- 7: Druckraum
- 8: Wegmesssystem
- 9: Druckerzeugungsvorrichtung
- 10: Druckmittelspeicher
- 11: Druckregulierungsmittel
- 12: Schaltventil
- 13: Steuerungs- und Regelungsvorrichtung
- 14: Druckmittelsenke
- 15: Hauptdruckleitung
- 16: Steuerdruckleitung
- 17: Druckmittelleitung
- 18: Rückflussleitung für Druckmedium
- 19: Signalleitung
- 20: Signalleitung
- 21: Signalleitung
- 22: Diagramm
- 23: Zustand Kupplung geöffnet
- 24: Zustand Kupplung Mitnahmepunkt
- 25: Verlauf mit Stick-Slip Effekt
- 26: erfindungsgemäßer Verlauf
- 27: Sollverlauf
- 28: Umkehrpunkt der Bewegungsrichtung
- F: äußere Kraft

## Patentansprüche

1. Ansteuerverfahren eines Betätigungsmittels (1), wobei das Betätigungsmittel (1) einen Kolben (3) und einen Zylinder (4) aufweist, und der Kolben (3) in dem Zylinder (4) axial verschiebbar angeordnet ist, einen mit einem Medium gefüllten Druckraum (7) begrenzt und mit einer Kolbenstange (5) in Verbindung steht, wobei die Position beweglicher Teile (3) des Betätigungsmittels (1) über ein Wegmesssystem (8) erfasst wird und das Betätigungsmittel (1) über eine Druckregelungsvorrichtung (2) ansteuerbar ist, **dadurch gekennz eichnet** , dass der Kolben (3) des Betätigungsmittels (1) durch entsprechende Ansteuerung der Druckregelungsvorrichtung (2) vor der Einleitung der beabsichtigten Bewegungsrichtung in die der beabsichtigten Bewegungsrichtung entgegengesetzte Bewegungsrichtung bewegt wird und ab Registrierung dieser Bewegungsrichtung auf die beabsichtigte Bewegungsrichtung gewechselt wird, wobei die Richtungsumkehr aus der Bewegung heraus erfolgt.

2. Verfahren nach Anspruch 1, **dadurch gekennzeichnet, dass** in einem Umkehrpunkt (28) der Bewegungsrichtung des Betätigungsmittels ein erhöhtes Kraftniveau vorherrscht.

3. Verfahren nach Anspruch 1 oder 2, **dadurch gekennzeichnet, dass** die Wirkung eines möglichen Wegsprungs aus der Überwindung einer Hysterese gemindert wird.

4. Verfahren nach einem der Ansprüche 1 bis 3, **dadurch gekennzeichnet, dass** eine Routine zur Ansteuerung des Betätigungsmittels (1) grundsätzlich bei jeder Betätigung des Betätigungsmittels (1) abläuft.

5. Verfahren nach einem der Ansprüche 1 bis 3, **dadurch gekennzeichnet, dass** die Routine zur Ansteuerung des Betätigungsmittels (1) nur dann aktiv wird, wenn eine Iststellung des Betätigungsmittels (1) sich einer Sollstellung innerhalb eines Beobachtungszeitraumes nicht um ein definiertes Quantum nähert.

6. Verfahren nach einem der vorangegangenen Ansprüche, **dadurch gekennzeichnet, dass** eine Änderung des Stellweges des Betätigungsmittels (1) durch einen am Betätigungsmittel (1) intern oder extern angeordneten Wegsensor erfasst wird.

## Claims

1. Method for activating an actuation means (1), the actuation means (1) having a piston (3) and a cylinder (4), and the piston (3) being arranged axially displaceably in the cylinder (4), delimiting a pressure space (7) filled with a medium, and being connected to a piston rod (5), the position of movable parts (3) of the actuation means (1) being detected via a travel measurement system (8), and the actuation means (1) being activatable via a pressure-regulating device (2), **characterized in that**, as a result of the appropriate activation of the pressure-regulating device (2), the piston (3) of the actuation means (1) is moved, before the initiation of the intended direction of movement, in the opposite direction of movement to the intended direction of movement and, from the moment when this opposite direction of movement is recorded, is changed to the intended direction of movement, the reversal of direction taking place out of the movement.

2. Method according to Claim 1, **characterized in that** an increased force level prevails at a reversal point (28) of the direction of movement of the actuation means.

3. Method according to Claim 1 or 2, **characterized in that** the effect of a possible travel jump arising from the overcoming of a hysteresis is mitigated.

4. Method according to one of Claims 1 to 3, **characterized in that** a routine for activating the actuation means (1) proceeds basically in the event of each actuation of the actuation means (1).

5. Method according to one of Claims 1 to 3, **characterized in that** the routine for activating the actuation means (1) becomes active only when an actual position of the actuation means (1) does not approach a desired position by the amount of a defined quantity within an observation period.

6. Method according to one of the preceding claims, **characterized in that** a change in the actuating travel of the actuation means (1) is detected by a travel sensor arranged internally or externally on the actuation means (1).

## Revendications

1. Procédé de commande d'un moyen d'actionnement (1), dans lequel le moyen d'actionnement (1) présente un piston (3) et un cylindre (4), et le piston (3) est disposé de manière déplaçable axialement dans le cylindre (4), limite un espace de pression (7) rempli de fluide et est en liaison avec une tige de piston (5), la position des pièces mobiles (3) du moyen d'actionnement (1) étant détectée par le biais d'un système de mesure de distance (8) et le moyen d'actionnement (1) pouvant être commandé par le biais d'un dispositif de régulation de pression (2), **caractérisé en ce que** le piston (3) du moyen d'actionnement (1) est déplacé par une commande correspondante du dispositif de régulation de pression (2) avant l'initialisation du sens de déplacement envisagé, dans le sens de déplacement opposé au sens de déplacement envisagé, et à partir de l'enregistrement de ce sens de déplacement, est commuté au sens de déplacement envisagé, l'inversion du sens de déplacement s'effectuant en cours de déplacement.

2. Procédé selon la revendication 1, **caractérisé en ce qu'**au niveau d'un point d'inversion (28) du sens de déplacement du moyen d'actionnement, règne un niveau de force accru.

3. Procédé selon la revendication 1 ou 2, **caractérisé en ce que** l'effet d'un saut de parcours possible dû au passage d'une hystérésis est réduit.

4. Procédé selon l'une quelconque des revendications 1 à 3, **caractérisé en ce qu'**un sous-programme de commande du moyen d'actionnement (1) se déroule en principe à chaque actionnement du moyen d'actionnement (1).

5. Procédé selon l'une quelconque des revendications 1 à 3, **caractérisé en ce que** le sous-programme de commande du moyen d'actionnement (1) n'est activé que lorsqu'une position instantanée du moyen d'actionnement (1) ne s'approche pas, dans une mesure définie, d'une position de consigne à l'intérieur d'un intervalle de temps d'observation.

6. Procédé selon l'une quelconque des revendications précédentes, **caractérisé en ce qu'**une variation de la course de réglage du moyen d'actionnement (1) est détectée par un capteur de distance disposé à l'intérieur ou à l'extérieur du moyen d'actionnement (1).
